# EUROPEAN PATENT SPECIFICATION

(11) **EP 0 322 736 B1**
(45) Date of publication and mention of the grant of the patent: **21.04.1993**
(21) Application number: 88121388.8
(22) Date of filing: 21.12.1988
(51) Int. Cl.: C08J 3/02

(54) **Water-soluble polymer dispersion**
Wasserlösliche Polymerdispersion
Dispersion de polymère soluble dans l'eau

(30) Priority: 24.12.1987 US 137841
(43) Date of publication of application: 05.07.1989
(73) Proprietor: AQUALON COMPANY, Wilmington Delaware 19850-5417 (US)
(72) Inventor: Ahmed, Syed M., Dr., Wilmington Delaware 19808 (US)
(74) Representative: Lederer, Franz, Dr.

(56) References cited:
- EP-A- 0 002 368
- US-A- 4 453 979

## Description

This invention relates to aqueous dispersions of particulate water-soluble polymers (WSPs) in which the polymer is dispersed in polyethylene glycol to avoid the formation of lumps in the aqueous dispersions, and methods for making them.

WSPs are often used to modify rheological properties of aqueous solutions, for instance, as thickeners for latex paints, well servicing fluids, cosmetics, personal hygiene products, and food products, and as stabilizers for emulsion and suspension polymerization.

In solution or dispersion (emulsion) form, WSPs have commercial advantages over those in the dry powder (particulate) form, including ease in handling and in the case of dispersions, higher dissolution rates. Synthetic WSPs based on liquid or gaseous monomers can easily be prepared in liquid forms, for instance by solution or dispersion polymerization, but WSPs derived from natural starting materials are already solid polymers. Since they may lump excessively when added to water, special care must be taken when adding such WSPs to water, to avoid the lumping and gel formation that result in very slow dissolution rates. Unacceptable gel levels often remain in these solutions.

One method for reducing lumping when dispersing hydrophilic gums such as sodium carboxymethyl cellulose (CMC) and guar gum into formulations containing water, is described in U.S. Patent 4,453,979; it comprises (a) preparing a blend of water and a water-miscible alcohol that includes polyethylene glycol having a preferred molecular weight of 200 to 4000, (b) introducing the hydrophilic gum into the aqueous alcohol blend, (c) intimately mixing the resultant slurry, and (d) feeding the slurry into a water-containing formulation. This technique is not suitable for making dispersions of WSPs that are stable.

The term "dispersion" is used herein to refer to what might also be termed an "emulsion", "slurry" or "sol" and constitutes a vehicle containing WSP that can be used in applications where WSP in particulate or liquid form are conventionally used.

A stable dispersion is considered to be one that does not at least immediately separate into two or more distinct layers when standing, and in general, stability is defined in terms of the purpose of the dispersion. When the dispersion will be used within a short period of time, in the order of minutes or hours, it is sufficient that the polymer remains dispersed or may be readily redispersed within that period (stable "as made" or "moderately" stable), but it is often desirable for the dispersion to remain stable during storage for periods of one to six months. Conventionally dispersed WSP tends to agglomerate into gels or solids that cannot readily redisperse after standing for more than a few hours or days or even much shorter periods.

There is a need for an improved method for making dispersions of certain particulate water-soluble polymers in aqueous liquids (including polyacrylamide and polyacrylamide derivatives, polyvinylpyrrolidone and polyvinylpyrrolidone derivatives, guar gum and guar gum derivatives, and cellulose derivatives), that are effectively stable for their contemplated uses before or after storage for up to six months.

According to the invention, an aqueous dispersion comprising a particulate water-soluble polymer and a low-molecular weight polyethylene glycol (LW-PEG), is characterized in that it also contains water and a high molecular weight polyethylene glycol (HW-PEG), and the particulate water-soluble polymer is substantially insoluble in the low-molecular weight polyethylene glycol.

A "low molecular weight polyethylene glycol" is a substituted or unsubstituted polyethylene glycol that is liquid at room temperature and has a molecular weight of about 200 to about 700, preferably 250 to 500.

A "high molecular weight polyethylene glycol" is a substituted or unsubstituted polyethylene glycol that is solid at room temperature (preferably in the form of a flake or powder), and has a molecular weight greater than about 3,000, preferably of 3,000 to 50,000, and most preferably of 10,000 to 30,000. Such polyethylene glycols may be readily dissolved in water.

With respect to both low or high molecular weight polyethylene glycols, one or more of each may be used, and preferably, they are either unsubstituted or substituted with a methoxy group.

Polyethylene glycol, also called "polyoxyethylene", "poly(ethylene oxide)" or "polyglycol", the well known condensation polymer of ethylene glycol having the formula HOCH₂CH₂-(OCH₂CH₂-)ₙ-OCH₂CH₂-OH or H(OCH₂CH₂)ₙOH, as well as methoxy polyethylene glycol are commercially available in various grades, for instance, under the trademark "Carbowax" of Union Carbide Company. Polyethylene glycol is commonly identified by its molecular weight (MW) and the type of substituents in combination with the initials "PEG". Thus, polyethylene glycol with a molecular weight of 350 that is substituted with a methoxy group may be referred to as "methoxy PEG 350". This terminology is used herein when appropriate.

The polymer must not be readily soluble in the LW-PEG because if too much of the polymer dissolves in the LW-PEG, the liquid will become too viscous to be suitable for the purposes of this invention, in some instances forming a gel. The degree of solubility that is permissable obviously is immediately apparent by trial of any particular combination of ingredients.

Examples of water-soluble cellulose derivatives that can be used to form the aqueous dispersions of the invention are hydroxyethyl cellulose (HEC), carboxymethyl hydroxyethyl cellulose (CMHEC), hydrophobically modified hydroxyethyl cellulose (HMHEC), sodium carboxymethyl cellulose (CMC), ethyl hydroxyethyl cellulose, methyl cellulose and hydroxypropyl methyl cellulose.

Dispersable synthetic polymers include polyvinylpyrrolidone, polyacrylamide, and their derivatives. Guar, hydroxypropyl guar, xanthan, gum tragacanth, gum karaya, gum arabic, tara gum, and similar polysaccharides can also be dispersed with this invention.

Preferably, the polymer is polyacrylamide or a polyacrylamide derivative, polyvinylpyrrolidone or a polyvinylpyrrolidone derivative, guar gum or a guar gum derivative, or a cellulosic derivative. The preferred cellulose derivatives are sodium carboxymethyl cellulose and carboxymethyl hydroxyethyl cellulose.

Also according to the invention, a method for preparing the dispersions of this invention in which WSP is mixed with LW-PEG, is characterized in that an aqueous solution of the HW-PEG or water and HW-PEG is added to the mixture with agitation to form a stable dispersion.

The resultant dispersion may be stored and added, or directly added, to any aqueous formulation requiring WSP where the end use will tolerate the presence of PEG. It is desirable that the dispersion have suitable fluidity for its intended use, requiring control of the ratio of WSP to LW-PEG, (which is affected by the solubility of the particular WSP in the LW-PEG), the ratio of WSP to HW-PEG, and the ratio of WSP to water. Generally, higher concentrations of WSP are preferred when the dispersion will be transported or stored for long periods.

The stability of the dispersions of this invention tends to be extremely sensitive to the amount of water used and the amount of water used should not be so great the polymer swells and a gel is formed, the permissible amount being immediately apparent for any particular combination of ingredients.

Preferably, in the mixture of LW-PEG and WSP, the weight ratio of WSP to LW-PEG should be 1:100 to 1:1, more preferably 1:5 to 1:2. Also preferably, the amount of HW-PEG added should be in a weight ratio of WSP to HW-PEG of 5:1 to 20:1, preferably 10:1 to 15:1, and the amount of water added with it should be in a weight ratio of WSP to water of 15:1 to 1:3, preferably 10:1 to 1:1.5.

The stability of an individual dispersion can be readily determined without undue experimentation by anyone of ordinary skill in the art by a simple test-tube experiment in which a WSP is mixed with LW-PEG to determine its compatibility. If the polymer is found to be sufficiently insoluble in the LW-PEG, water and HW-PEG, aqueous solutions of HW-PEG, or combinations thereof are added to the slurry until the specific combination that provides the desired stability and fluidity is determined. For instance, a composition comprising 20% medium viscosity CMC (ca. 0.7 degree of substitution, medium viscosity, i.e., 400-800 mPa.s (cps) Brookfield Viscosity in a 2% solution), 48% PEG 200, 29% water and 3% PEG 20,000, all based on the total weight of the dispersions, forms a gel; whereas, a similar composition containing PEG 300 or PEG 400 instead of PEG 200 forms a stable dispersion (stable as made).

It is believed that this invention involves a water-in-water emulsion in which the "dispersion" has two phases formed in the presence of the HW-PEG, a dispersion medium or vehicle comprising the LW-PEG and water, and a dispersed phase comprising the WSP and water. The distribution of the HW-PEG is not known. Thus, for the purposes of this invention, the term "dispersion" is used to describe any mixture containing the four components that can be used in applications where particulate or liquid water-soluble polymers are conventionally used.

The present invention will be illustrated in the following examples. In the examples all percentages and parts are by weight unless otherwise noted.

### Example 1

The following example shows the effect of adding water or water containing HW-PEG to a dispersion of CMC in a LW-PEG vehicle.

A mixture of PEG 300 and CMC (CMC 7M, available from the Aqualon Company, Wilmington, Delaware, having a Brookfield viscosity of 400-800 mPa.s (cps) in a 2 wt % solution at 25°C) was prepared and found to be unstable. Subsequently, in separate runs, water and water containing small amounts of PEG 20,000 were prepared. Results are shown in the following Table 1. Only the dispersion containing HW-PEG was stable.

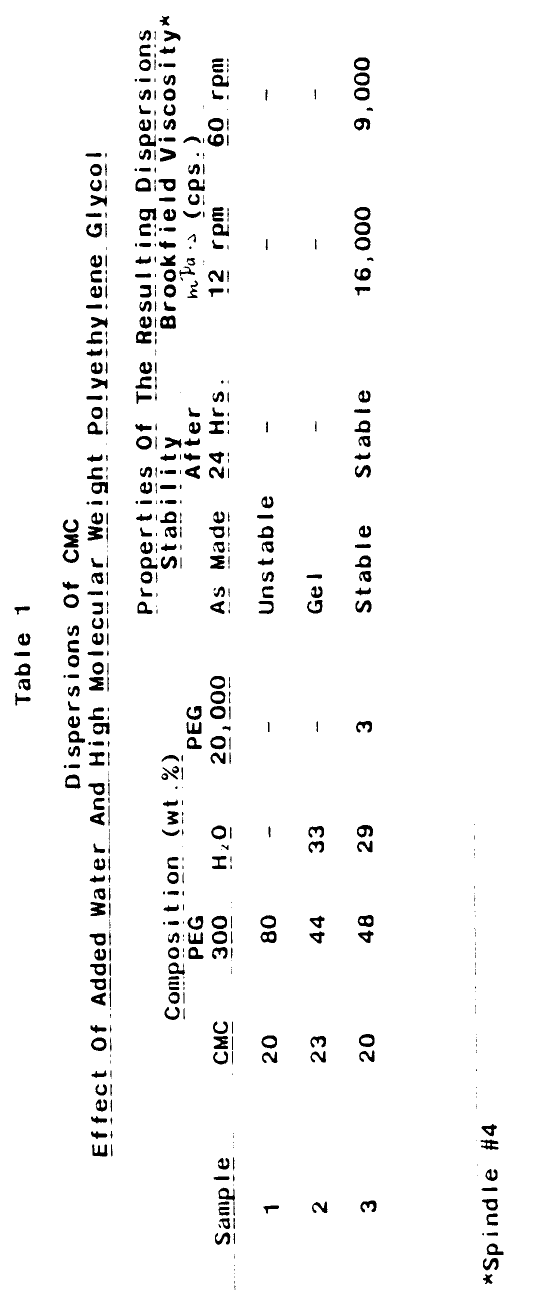

### Example 2

This example shows that the polymer must be substantially insoluble in the LW-PEG used for stable dispersion.

Mixtures of the CMC used in Example 1 and LW-PEG were prepared to determine their solubility. CMC was found to be soluble up to 20 wt. % with PEG 200, but substantially insoluble in PEG 300 and PEG 400. The blends of the latter two mixtures quickly separated into two distinct layers upon standing. Addition of water containing a small amount of PEG 20,000 increased the stability of the PEG 300 and PEG 400 dispersions, whereas the PEG 200 composition formed a gel. Results obtained with water and PEG 20,000 are shown in Table 2 below.

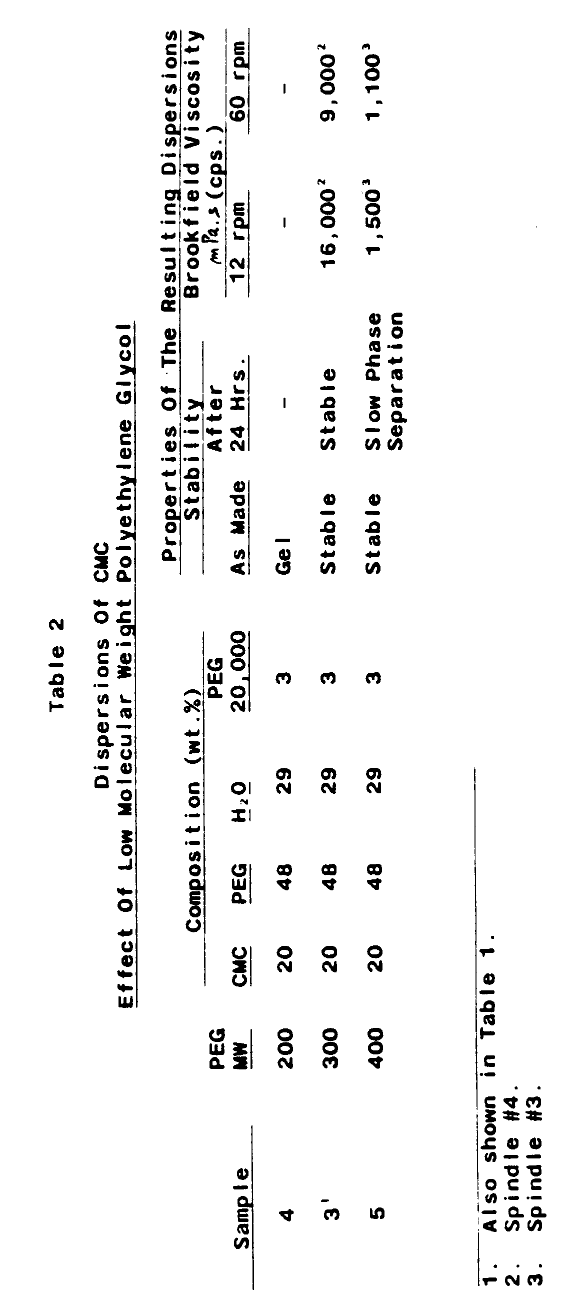

The data in Table 2 show that the polymer to be dispersed must be substantially insoluble in the LW-PEG used for stable dispersion.

### Example 3

This example shows the preparation of dispersions containing various amounts of PEG 400, CMC, water and PEG 20,000.

Dispersions of the CMC used in Example 1 in PEG 400 were prepared as in example 2, except that the weights of the components were varied as shown in Table 3 below. Results obtained are shown in Table 3 below.

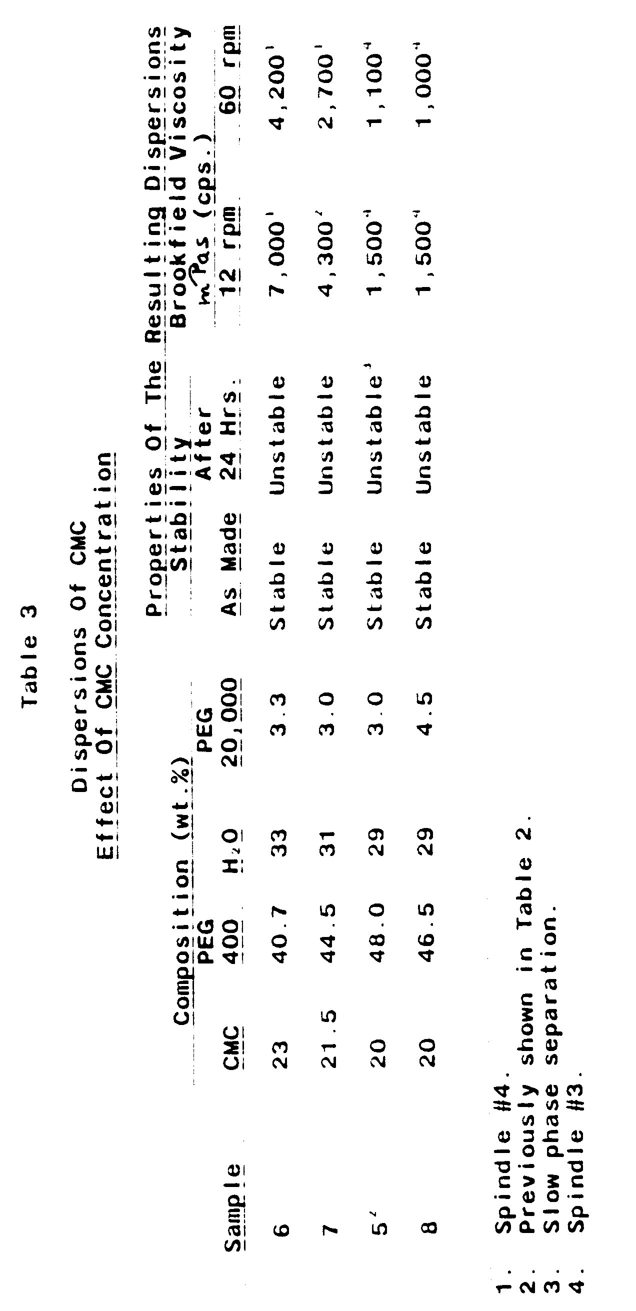

CMC dispersioned with PEG 400 was stable, as made, but was not stable after 24 hours. Slow phase separation occurred after 24 hours with sample 5.

### Example 4

The following example shows the effect of adding water, and water containing high molecular weight polyethylene glycol to a dispersion containing CMHEC and a low molecular weight polyethylene glycol.

CMHEC 420H (available from the Aqualon Company, Wilmington, Delaware, having a Brookfield LVF viscosity in a 1 wt. % aqueous solution of 1,500 to 2,500 mPa.s (cps) at 30 rpm with a #3 spindle) was mixed with PEG 200, 300, and 400 and found to be soluble, to varied extents, as evidenced by gradual increases in viscosities of the blends. CMHEC 420H, on the other hand, showed complete insolubility with Methoxy PEG 350, forming a somewhat stable dispersion on its own. Samples 9 to 13 were prepared using the methods of Example 2, except that the components shown in Table 4 below were used. Results obtained are shown in Table 4 below.

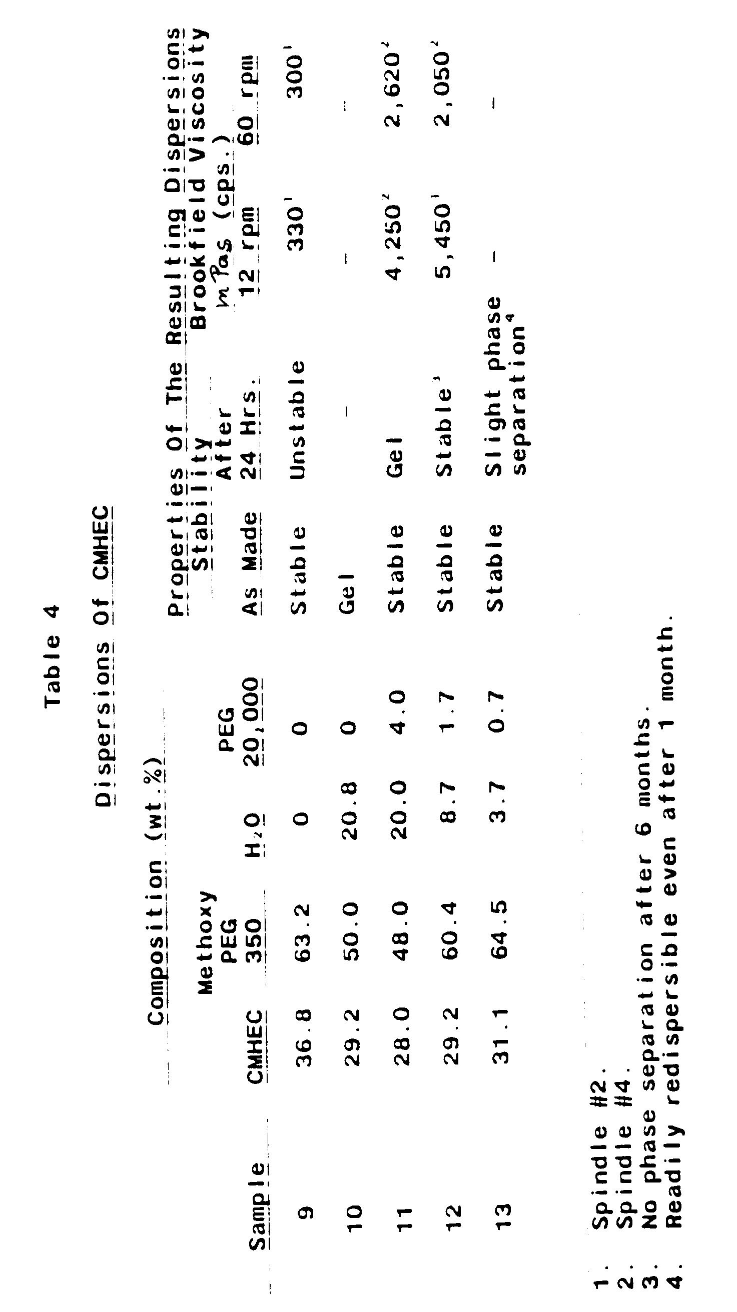

Table 4 shows that due to the insolubility of, CMHEC 420H in methoxy PEG 350 a somewhat stable dispersion results when they are mixed. Addition of water and PEG 20,000 in proper amounts (Samples 12 and 13) produces a much more stable dispersion, i.e., stable for periods of greater than 6 months.

The dispersions of this invention are useful in applications where dry water-soluble cellulose polymers have previously been used, as well as in applications where dry water-soluble cellulose polymers have not been well suited due to their slow dissolution rates. The dispersions are especially useful for dispersing water-soluble polymers in aqueous solutions such as, e.g., aqueous paints, well servicing fluids, cosmetics, personal hygiene products, food products, and fluids used in the preparation of polymers.

## Claims

1. An aqueous dispersion comprising a particulate water-soluble polymer and a substituted or unsubstituted low-molecular weight polyethylene glycol, which is liquid at room temperature and has a molecular weight of 200 to 700, characterized in that it also contains water and
a substituted or unsubstituted high-molecular weight polyethylene glycol, which is solid at room temperature having a molecular weight of 3,000 to 50,000, wherein the particulate water-soluble polymer is substantially insoluble in the low-molecular weight polyethylene glycol.

2. An aqueous dispersion as claimed in claim 1, further characterized in that the low molecular weight polyethylene glycol has a molecular weight in the range of from 250 to 500.

3. An aqueous dispersion as claimed in claim 1 or 2, further characterized in that the high molecular weight polyethylene glycol has a molecular weight of about 10,000 to about 30,000.

4. An aqueous dispersion as claimed in any of the preceding claims, further characterized in that the low molecular weight polyethylene glycol is unsubstituted or substituted with a methoxy group and the high molecular weight polyethylene glycol is unsubstituted or substituted with a methoxy group.

5. An aqueous dispersion as claimed in any of the preceding claims, further characterized in that the weight ratio of water-soluble polymer:low molecular weight polyethylene glycol is 1:100 to 1:1, the weight ratio of water-soluble polymer:water is 15:1 to 1:3, and the weight ratio of water-soluble polymer:high molecular weight polyethylene glycol is 5:1 to 20:1.

6. An aqueous dispersion as claimed in claim 5, further characterized in that the weight ratio of water-soluble polymer:low molecular weight polyethylene glycol is 1:5 to 1:2, the weight ratio of water-soluble polymer:water is 10:1 to 1:1,5 and the weight ratio of water-soluble polymer:high molecular weight polyethylene glycol is 10:1 to 15:1.

7. An aqueous dispersion as claimed in any of the preceding claims, further characterized in that the water-soluble polymer is polyacrylamide or a polyacrylamide derivative, polyvinylpyrrolidone or a polyvinylpyrrolidone derivative, guar gum or a guar gum derivative, or a cellulose derivative.

8. An aqueous dispersion as claimed in any of the preceding claims, further characterized in that the water-soluble polymer is sodium carboxymethyl cellulose or carboxymethyl hydroxyethyl cellulose.

9. A method for making an aqueous dispersion as claimed in any of the preceding claims, in which the water-soluble polymer is mixed with the low-molecular weight polyethylene glycol, is characterized in that an aqueous solution of the high-molecular weight polyethylene glycol or water and the high-molecular weight polyethylene glycol is added to the mixture with agitation to form a stable dispersion.

## Patentansprüche

1. Wässerige Dispersion, umfassend ein teilchenförmiges wasserlösliches Polymer und ein substituiertes oder unsubstituiertes Polyethylenglycol niedrigen Molekulargewichts, das bei Raumtemperatur flüssig ist und ein Molekulargewicht von 200 bis 700 aufweist, **dadurch gekennzeichnet,** daß es auch Wasser und ein substituiertes oder unsubstituiertes Polyethylenglycol hohen Molekulargewichts enthält, das bei Raumtemperatur fest ist und ein Molekulargewicht von 3000 bis 50000 aufweist, wobei das teilchenförmige wasserlösliche Polymer im wesentlichen in dem Polyethylenglycol niedrigen Molekulargewichts unlöslich ist.

2. Wässerige Dispersion nach Anspruch 1, zusätzlich **dadurch gekennzeichnet,** daß das Polyethylenglycol niedrigen Molekulargewichts ein Molekulargewicht im Bereich von 250 bis 500 aufweist.

3. Wässerige Dispersion nach Anspruch 1 oder 2, zusätzlich **dadurch gekennzeichnet,** daß das Polyethylenglycol hohen Molekulargewichts ein Molekulargewicht von etwa 10000 bis etwa 30000 aufweist.

4. Wässerige Dispersion nach einem der vorangehenden Ansprüche, zusätzlich **dadurch gekennzeichnet,** daß das Polyethylenglycol niedrigen Molekulargewichts unsubstituiert oder mit einer Methoxygruppe substituiert ist und das Polyethylenglycol hohen Molekulargewichts unsubstituiert oder mit einer Methoxygruppe substituiert ist.

5. Wässerige Dispersion nach einem der vorangehenden Ansprüche, zusätzlich **dadurch gekennzeichnet,** daß das Gewichtsverhältnis des wasserlöslichen Polymers zum Polyethylenglycol niedrigen Molekulargewichts 1:100 bis 1:1, das Gewichtsverhältnis vom wasserlöslichen Polymer zu Wasser 15:1 bis 1:3 und das Gewichtsverhältnis vom wasserlöslichen Polymer zu Polyethylenglycol hohen Molekulargewichts 5:1 bis 20:1 beträgt.

6. Wässerige Dispersion nach Anspruch 5, zusätzlich **dadurch gekennzeichnet,** daß das Gewichtsverhältnis des wasserlöslichen Polymers zum Polyethylenglycol niedrigen Molekulargewichts 1:5 bis 1:2, das Gewichtsverhältnis des wasserlöslichen Polymers zu Wasser 10:1 bis 1:1,5 und das Gewichtsverhältnis vom wasserlöslichen Polymer zu Polyethylenglycol hohen Molekulargewichts 10:1 bis 15:1 beträgt.

7. Wässerige Dispersion nach einem der vorangehenden Ansprüche, zusätzlich **dadurch gekennzeichnet,** daß das wasserlösliche Polymer, Polyacrylamid oder ein Polyacrylamidderivat, Polyvinylpyrrolidon oder ein Polyvinylpyrrolidonderivat, Guargummi oder ein Guargummiderivat oder ein Cellulosederivat ist.

8. Wässerige Dispersion nach einem der vorangehenden Ansprüche, zusätzlich **dadurch gekennzeichnet,** daß das wasserlösliche Polymer Natriumcarboxymethylcellulose oder Carboxymethylhydroxyethylcellulose ist.

9. Verfahren zur Herstellung einer wässerigen Dispersion nach einem der vorangehenden Ansprüche, wobei das wasserlösliche Polymer mit dem Polyethylenglycol niedrigen Molekulargewichts vermischt wird, **dadurch gekennzeichnet,** daß eine wässerige Lösung des Polyethylenglycols hohen Molekulargewichts oder Wasser und das Polyethylenglycol hohen Molekulargewichts zu dem Gemisch unter Rühren und Bildung einer stabilen Disperison zugegeben wird.

## Revendications

1. Dispersion aqueuse, comprenant un polmyère hydrosoluble particulaire et un polyéthylèneglycol substitué ou non substitué de bas poids moléculaire, qui est liquide à la température ambiante et a un poids moléculaire de 200 à 700, caractérisée en ce qu'elle contient aussi de l'eau et un polyéthylèneglycol substitué ou non substitue de haut poids moléculaire, qui est solide à la température ambiante et a un poids moléculaire de 3000 à 50 000, le polymère hydrosoluble particulaire étant pratiquement insoluble dans le polyéthylèneglycol de bas poids moléculaire.

2. Dispersion aqueuse selon la revendication 1, caractérisée en outre en ce que le polyéthylèneglycol de bas poids moléculaire a un poids moléculaire dans la gamme de 250 à 500.

3. Dispersion aqueuse selon la revendication 1 ou 2, caractérisée en outre en ce que le polyéthylèneglycol de haut poids moléculaire a un poids moléculaire d'environ 10 000 à environ 30 000.

4. Dispersion aqueuse selon l'une quelconque des revendications 1 à 3, caractérisée en outre en ce que le polyéthylèneglycol de bas poids moléculaire est non substitué ou substitué par un groupement méthoxy et le polyéthylèneglycol de haut poids moléculaire est non substitué ou substitué par un groupement méthoxy.

5. Dispersion aqueuse selon l'une quelconque des revendications 1 à 4, caractérisée en outre en ce que le rapport pondéral du polymère hydrosoluble au polyéthylèneglycol de bas poids moléculaire est compris entre 1:100 et 1:1, le rapport pondéral du polymère hydrosoluble à l'eau est compris entre 15:1 et 1:3, et le rapport pondéral du polymère hydrosoluble au polyéthylèneglycol de haut poids moléculaire est compris entre 5:1 et 20:1.

6. Dispersion aqueuse selon la revendication 5, caractérisée en outre en ce que le rapport pondéral du polymère hydrosoluble au polyéthylèneglycol de bas poids moléculaire est compris entre 1:5 et 1:2, le rapport pondéral du polymère hydrosoluble à l'eau est compris entre 10:1 et 1:1,5 et le rapport pondéral du polymère hydrosoluble au polyéthylèneglycol de haut poids moléculaire est compris entre 10:1 et 15:1.

7. Dispersion aqueuse selon l'une quelconque des revendications 1 à 6, caractérisée en outre en ce que le polymère hydrosoluble est un polyacrylamide ou un dérivé de polyacrylamide, une polyvinylpyrrolidone ou un dérivé de polyvinylpyrrolidone, une gomme de guar ou un dérivé de gomme de guar ou un dérivé cellulosique.

8. Dispersion aqueuse selon l'une quelconque des revendications 1 à 7, caractérisée en outre en ce que le polymère hydrosoluble est la carboxyméthylcellulose sodique ou la carboxyméthylhydroxyéthylcellulose.

9. Procédé de préparation d'une dispersion aqueuse selon l'une quelconque des revendications 1 à 8, dans lequel la polymère hydrosoluble est mélangé au polyéthylèneglycol de bas poids moléculaire, caractérisé en ce qu'une solution aqueuse du polyéthylèneglycol de haut poids moléculaire ou de l'eau et le polyethylèneglycol de haut poids moléculaire sont ajoutés au mélange sous agitation, pour former une dispersion stable.
